# EUROPEAN PATENT APPLICATION

(11) **EP 2 746 983 A1**
(43) Date of publication of application: **25.06.2014**
(21) Application number: 12290458.4
(22) Date of filing: 21.12.2012
(51) Int. Cl.: G06F 21/62, H04L 29/06, G06Q 30/02

(54) **Privacy preserving computation of popular trends for group-based recommendation services**

(71) Applicant: Alcatel Lucent, 75007 Paris (FR)
(72) Inventor: Nandi, Animesh, 560045 Bangalore (IN)
(74) Representative: Script IP Limited

(57) **Abstract**

Privacy preserving network environment (100) comprising a plurality of middleware nodes (104). Each middleware node (104) configured to manage a plurality of items and comprises a group-score determination module (126) coupled to a node processor (110). The group-score determination module (126) configured to receive for each of the items managed by the middleware node (104), item data including an item id, a group id, and a rating of the item, from one or more end users; and ascertain for each of the items, a group-score based on the corresponding rating. A top-rated item ascertaining module (128) coupled to the node processor (110) to determine a plurality of top-rated items from the plurality of items based on the group-score corresponding to each of the items and provide the group-score corresponding to the top-rated items to a group representative.

## Description

### FIELD OF INVENTION

The present subject matter relates to group-based recommendation services and, particularly but not exclusively, to a privacy preserving network for group-based recommendation services.

### BACKGROUND

Owing to the large mass of content available over the World Wide Web, end users accessing content provided by service providers are often provided data analytics and personalized assistance, such as recommendation services by the service providers and search engines for easily accessing relevant content. Conventionally, various techniques, such as content based recommendation, collaborative recommendation, and data analytics, are used to provide the personalized services to the end users. In content based recommendation, the end users are recommended content, services or products which are similar to the content, services or products used or liked by the end users in the past or which match the interest or choice of the end user. In collaborative recommendation, the end user is recommended content, services or products which are similar to the content, services or products used or liked by other end users having similar or same interest or choices.

In an example of content based recommendation, a movie review website may monitor an end user, to regularly observe a certain category of movies viewed by the end user, for example, animated movies. Accordingly, every time an animated movie is available for view, the end user may be provided a recommendation, such as a notification or an alert, for example, to download the movie by making relevant payments. Similarly, in collaborative recommendation, also known as collaborative filtering, service providers may provide targeted advertisements to an end user, where these advertisements pertain to product or services that have been preferred by other end users, who have similar interests and preferences as the end user. For example, an internet protocol television (IPTV) service provider may recommend television shows or movies to the end user, if the television shows or movies have been viewed by other end users whose interests match the interests of the end user.

Further, users need to provide their personal data to service providers for executing data analytics applications, for example, for data mining purposes. In midst of all these techniques for data analytics and offering relevant content to the end users by the service providers, users of today feel increasingly concerned about their personal and potentially sensitive information.

### SUMMARY

This summary is provided to introduce concepts related to privacy preserving computation of popular trends for group-based recommendation services. This summary is not intended to identify essential features of the claimed subject matter nor is it intended for use in determining or limiting the scope of the claimed subject matter.

In one implementation, a privacy preserving network environment comprising a plurality of middleware nodes is described. Each of the plurality of middleware nodes is configured to manage a plurality of items and comprises a node processor and a group-score determination module coupled to the node processor. The group-score determination module is configured to receive, from one or more end users, item data for each of the plurality of items managed by the middleware node, where the item data includes an item id, a group id, and a rating of the item. The group-score determination module is further configured to ascertain for each of the plurality of items a group-score based on the corresponding rating. Each of the middleware node further includes a top-rated item ascertaining module coupled to the node processor. The top-rated item ascertaining module configured to determine a plurality of top-rated items from among the plurality of items based on the group-score corresponding to each of the plurality of items. The top-rated item ascertaining module is further configured to provide the group-score corresponding to each of the plurality of top-rated items to a group representative. Each of the middleware nodes further includes a popular trends ascertaining module coupled to the node processor. The popular trends ascertaining module configured to receive node ratings data from each of the plurality of middleware nodes, where the node ratings data includes the group-score corresponding to each of the plurality of top-rated items managed by the middleware node corresponding to the node ratings data. The popular trends ascertaining module is further configured to determine the one or more popular trends of the interest group based on the node ratings data.

In another implementation, a method for preserving privacy in a network environment is described. The method includes receiving item data for each of a plurality of items managed by a middleware node, where the item data includes an item id, a group id, and a rating of the item. The method further includes ascertaining, for each of the plurality of items, a group-score based on the corresponding rating received from one or more end users associated with an interest group. Further, the method includes determining a plurality of top-rated items from among the plurality of items based on the group-score corresponding to each of the plurality of items. The method further includes providing the group-score corresponding to each of the plurality of top-rated items to a group representative.

In another implementation, a middleware node is described. The middleware node includes a node processor and a group-score determination module coupled to the node processor. The group-score determination module is configured to receive, from one or more end users, item data for each of the plurality of items managed by the middleware node, where the item data includes an item id, a group id, and a rating of a corresponding item from among the plurality of items. The group-score determination module is further configured to ascertain for each of the plurality of items a group-score based on the corresponding rating. Each of the middleware node further includes a top-rated item ascertaining module coupled to the node processor. The top-rated item ascertaining module is configured to determine a plurality of top-rated items from among the plurality of items, based on the group-score corresponding to each of the plurality of items. The top-rated item ascertaining module is further configured to identify a middleware node from among the plurality of middleware nodes as a group representative based on a node identifier, where the node identifier is generated based on the group id and a replica id. Further, the middleware node provides the group-score corresponding to each of the plurality of top-rated items to the group representative for computation of one or more popular trends of an interest group for group-based recommendation service.

In another implementation, a user device is described. The user device includes a device processor and a middleware identification module coupled to the device processor. The middleware identification module is configured to determine the middleware node from among a plurality of middleware nodes based on the node identifier. The user device further includes an interaction module coupled to the device processor. The interaction module is configured to provide item data corresponding to the item to the middleware node, where the item data includes an item id, a group id, and a rating of the item. The middleware identification module is further configured to compute the node identifier based on the item id of the item and the group id corresponding to an interest group to which an end user of the user device belongs.

In another implementation, a method for identifying a middleware node from among a plurality of middleware nodes for privacy preserving computation of popular trends for group-based recommendation service is described. The method includes computing a node identifier based at least on an item id of an item for which ratings need to be sent to a middleware node. The method further includes determining the middleware node from among a plurality of middleware nodes based on the node identifier. The method further includes providing item data corresponding to the item, to the middleware node, where the item data includes the item id, a group id, and a rating of the item.

In yet another implementation, a computer-readable medium having embodied thereon a computer readable program code for executing a method is described. The method comprises computing a node identifier based at least on an item id of an item for which ratings need to be sent to a middleware node. The method further includes determining the middleware node from among a plurality of middleware nodes based on the node identifier. The method further includes providing item data corresponding to the item to the middleware node, where the item data includes the item id, a group id, and a rating of the item.

In yet another implementation, a computer-readable medium having embodied thereon a computer readable program code for executing a method is described. The method includes receiving item data for each of a plurality of items managed by a middleware node, where the item data includes an item id, a group id, and a rating of the item. The method further includes ascertaining, for each of the plurality of items, a group-score based on the corresponding rating received from one or more end users associated with an interest group. Further, the method includes determining a plurality of top-rated items from among the plurality of items based on the group-score corresponding to each of the plurality of items. The method further includes providing the group-score corresponding to each of the plurality of top-rated items, to a group representative.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig. 1 illustrates a network environment implementing privacy preserving computation of popular trends for group-based recommendation services, according to an embodiment of the present subject matter; and

Fig. 2 illustrates a method for privacy preserving computation of popular trends for group-based recommendation services, according to an embodiment of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

System(s) and method(s) for privacy preserving computation of popular trends for group-based recommendation services are described. The system(s) and the method(s) can be implemented in a variety of computing devices acting as distributed servers communicating with various user devices used by end users to avail services or view content provided by a service provider. The user devices and distributed servers that can implement the described method(s) include, but are not limited to, computing devices, such as a laptop, a desktop computer, a notebook, a mobile phone, a personal digital assistant, a workstation, a mainframe computer, a set top box, a media player, central directory servers, database server, file server, print server, web server, application server, and the like. Although the description herein is with reference to personal computers and distributed servers providing recommendation services and executing data analytics applications, the method(s) and the system(s) may be implemented in other servers and computing systems providing connectivity to the end users for protecting their privacy, as will be understood by a person skilled in the art.

Although recommendation services and personalized content are provided to different end users by service providers through various networks, the method(s) and the system(s) described herein are access independent, and support multiple access types including Global System for Mobile (GSM), Wideband Code Division Multiple Access (W-CDMA), Code Division Multiple Access (CDMA), Wireless Local Area Network (WLAN), Wireline, Local Area Network (LAN), and other networks providing connectivity.

Conventionally, many service providers attempt to personalize the services provided to end users, such as services of providing content, such as videos, audio, news, advertisements, etc., based on personal details, preferences, and choices of the end users. For this purpose, the service providers use various techniques to recommend services, contents, or products and execute data analytic applications based on factors like personal information, such as age, sex, and location of the end user; the past actions of the end user, or past preferences assessed for other end users who have been identified to have similar interests as that of the end user.

For example, if an end user, say user A, has purchased a book written by a particular author, the service provider may suggest the user A to purchase other books written by the same author or other books on the same or related subjects, etc. In a similar but another conventional approach, the service provider may recommend to the end user A, those contents or products that have been preferred by other end users having an interest profile similar to that of the end user A. For the purpose of providing personalized services and for data analytics, various conventionally known methods are used to cluster the end users having similar interests into one or more interest groups.

One such approach involves clustering the interest profiles using homomorphic encryption based strategies. In such an approach, the interest profiles of the users are encrypted by a centralized node using crypto techniques, such as homomorphic encryption enabling execution of protocol primitive operations, such as addition and multiplication for clustering the interest profiles using a distributed computation setting. Using the distributed computation setting allows executing multiple phases of the protocol primitive operations over user devices of a static set of end users, thus ensuring the privacy preservation. Further, certain approaches provide centralized solution where centralized intermediaries configured to cluster the interest profiles are untrusted by the end users. In such situations, each end user initially pre-processes the interest profile using a random projection based approach to obtain a projected interest profile for being communicated to the centralized intermediary, thus ensuring privacy.

Another approach for protecting private information involves clustering the interest profiles of the end users into one or more pre-defined interest groups using group ids or labels generated by a client device associated with the end user. The group id associated with the interest profile is then transmitted to a remote group aggregator responsible for the interest group for clustering the interest profile of the end user without having to analyze the interest profile.

The clusters thus performed are subsequently used by the service providers to identify popular trends among each of the interest groups based on ratings given by the end users belonging to the interest group. The popular trends thus identified may be used by the service provider, through the group aggregator corresponding to the group, for various purposes, such as recommending to all the end users subscribed to a particular interest group, the popular trends in their field of interest. Using the ratings to identify the popular trends however, may lead to comprise in privacy of the end users subscribed to the interest group due to, for example, publishing of the list of end users recommending the popular trends. For instance, a malicious group aggregator may exchange data related to ratings provided by different end users with a third party which may use the data for identifying the end users or the group to which the end users belong.

For example, an attacker may possess additional information, i.e., details available from various other sources, such as social networking sites and online databases, about the end user. The attacker may thus collude with the group aggregator, having the group id and the interest profile of the end user, to identify the interest groups to which the end user belongs, thus invading the end user's privacy as the end user may not wish the attacker to know the interest group to which the end user belongs, specially in cases of sensitive interest groups.

According to an implementation of the present subject matter, system(s) and method(s) for privacy preserving computation of popular trends for group-based recommendation services are described. As described before, the system(s) and method(s) can be implemented in a variety of processing and communicating devices capable of communicating with a network according to various different standards defined for the communication. Further, the system(s) and method(s) described herein may be connected through either wired networks or wireless networks provided via different means. In one implementation, a privacy protected network includes a plurality of end users associated with user devices for communicating with each other and distributed servers, such as one or more aggregator nodes or middleware nodes.

The system(s) and method(s) as described herein are configured to compute for each interest group, such as movies, dances, e-shopping, and social networking sites, one or more popular trends, i.e., items liked by maximum number of end users subscribed to the interest group. For instance, for the interest group related to a particular type of movies popular trends may be one or more movies that have been liked and given good ratings by a maximum number of end users subscribed to the interest group movies. A group aggregator, responsible for managing the group may subsequently use the popular trends for providing recommendations to all the end users subscribed to the interest group.

According to an embodiment of the present subject matter, a plurality of middleware nodes is provided to act as intermediaries between the end users and the group aggregator. In one implementation, each middleware node is configured to manage one or more items belonging to the interest group such that ratings for the items from all the end users subscribed to the interest group are received by the particular middleware node. For example, for the interest group corresponding to a particular type of movie, say, thriller movie, each middleware node may be configured to manage one or more movies, such that a first middleware node may manage movie1 and movie2, a second middleware node may manage movie3 and movie4, and so on. Thus, the end users subscribed to the interest group corresponding to thriller movie may provide the ratings for the movie1 and movie 2 to the first middleware node and the ratings for the movie3 and the movie4 to the second middleware node. Providing the intermediary middleware nodes for managing the items in a scrambled order, i.e., different items being managed by different middleware nodes helps in ensuring that no single entity receives data related to all items being consumed by the end users of the interest group. Further, the items may be defined as different components belonging to an interest group. For example, song1 and song2 may be items belonging to an interest group related to romantic songs.

Further, in cases where the middleware nodes are responsible for items corresponding to more than one group, each middleware node may be configured to manage items based on the groups to which the items belong, such that if an item belongs to more than one group, ratings from users of different groups are provided to different middleware nodes. For example, in case the movie1 belongs to group1 and group2, the ratings from the end users of the group2 may be received by the first middleware node, while the ratings from the end users of the group1 may be received by a third middleware node. Dividing the management of same items belonging to different groups among different middleware nodes helps in ensuring privacy in cases where the items may be rarely accessed and thus can be easily used to identify the groups of the end users using additional information. For instance, even if the middleware node managing the item becomes malicious it may not be able to identify the group to which the end user belongs as the end user may belong to any other group also, apart from the group managed by the middleware node, information about which might not be available with the group. For instance, the first middleware node in the above example may not know if the movie1 also belongs to group1 and may thus not be able to ascertain whether the end user belongs to group1 or group2.

In one implementation, the end users may be configured to provide, via the user device, ratings corresponding to the item to the middleware node configured to manage the item. For the purpose, the user device initially determines the middleware node based on a node identifier computed using hash functions. In one implementation, the node identifier may be computed based on an item id of the item corresponding to the item data, i.e., the item for which the rating is provided. In another implementation, the node identifier may be computed based on the item id of the item and a group id corresponding to the interest group to which the item belongs. For instance, in cases where the middleware node is responsible for items corresponding to only a single group, the node identifier may be computed based only on the item id, while in case where the middleware node is responsible for items corresponding to more than one interest group, the node identifier may be computed based on the item id and the group id.

Subsequently, the user device may send item data corresponding to the item accessed by the user to the middleware node configured to manage the item data. In one implementation, the item data may include item id corresponding to the item, group id corresponding to the group to which the item belongs, and the rating of the item data as given by the user based on the user's liking of the item. For example, the end user may send the item data corresponding to the movie1 to the first middleware node and the item data corresponding to the movie3 to the second middleware node.

The middleware node, on receiving the item data may retrieve, from the item data, the rating corresponding to the item for which the item data is provided. The middleware node may subsequently determine a group-score for each of the items managed by the middleware node based on the ratings received from each of the end users. Providing the ratings from all the end users for an item belonging to a particular interest group to a single middleware node thus, helps in efficient calculation of the group-score as the ratings are not required to be shared amongst different middleware nodes, thus preventing additional overheads and also ensuring privacy.

In one implementation, the group-score for an item may indicate the average rating given to item by the end users of a particular interest group and may be determined by computing an aggregate value of the ratings for the item received from all the end users accessing the item and subscribed to the particular interest group. Other examples of the group-scores may include, but are not limited to, frequency, average, standard deviation, and confidence interval of the ratings.

Further, upon calculation of group-scores for all the items belonging to a particular interest group, the middleware node may sort the items in a descending order of group-scores such that an item having the highest group-score is at top position. The middleware node may subsequently identify top-rated items for the interest group, say, top 10 items. The top rate items as will be understood are the items having maximum group-score from among the plurality of items managed by the middleware node.

Subsequently, the middleware node may provide the group-score corresponding to the top-rated items to a group representative configured to identify top items, say, top 10 items based on ratings received from the end users to determine the top trends of the interest group. In one embodiment, each of the middleware nodes may be configured to act as a group representative for at least one interest group. For instance, the first middleware node may be configured to function as the group representative for group1, while the second middleware node may be configured to act as the group representative for the group2. Further, in one embodiment a plurality of independent replicas of the group representative may be provided for identifying the top trends in an interest group, such that for the interest group all the replicas may determine the top trends.

Further, each of the middleware nodes may be configured to identify the group representative and its replicas for an interest group before sending the group-scores corresponding to the interest group. The group representative may be determined based on a group node identifier. In one implementation, the group node identifier may be generated as a hash function based on the group id and a replica id.

In one implementation, the middleware node may provide the group-scores corresponding to the top-rated items as node ratings data. The node ratings data, as will be understood, may include only the group-scores corresponding to the top-rated items and not the item ids corresponding to the top-rated items, thus preserving privacy for the interest group.

The group representative, upon receiving the node ratings data corresponding to each of the plurality of middleware nodes may identify a predefined number of top group-scores, say, 10 as the popular trends of the group. The group representative may determine the popular trends by initially sorting the group-scores in a predefined order using any conventionally known method of sorting. In one implementation, the group representative may use a method of merge sort for sorting the group-scores. The group representative may subsequently request the middleware nodes corresponding to the top group-score to provide item ids of the items corresponding to the top group-score. Providing item ids of only the popular trends facilitates in computing the popular trends in a privacy preserving method as the item ids of the remaining items are hidden from the group representative, thus ensuring user privacy even in cases where the group representative becomes malicious. Further, the top trends thus determined are provided to the group aggregator for being published as popular trends for the interest group and providing the recommendation services.

The system(s) and method(s) of the present subject matter thus facilitate in computing popular trends for interest groups in a privacy preserving manner. Providing middleware nodes as intermediaries between the user devices and the group aggregators helps in ensuring privacy protection in cases where the group aggregator may become malicious and provide item data to an attacker having the additional information. Further, providing plurality of middleware nodes with each middleware node managing a separate item helps in ensuring privacy protection in case where the middleware node may become malicious. Further, using group ids and item ids as the identification data for assigning item responsibility to a middleware node helps in ensuring privacy by reducing chances of the attacker identifying the end user's interest groups as in such cases, the middleware node may not know all the interest groups to which the item may belong.

The described methodologies can be implemented in hardware, firmware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described herein, or a combination thereof. Herein, the term "system" encompasses logic implemented by software, hardware, firmware, or a combination thereof.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit. Memory can be implemented within the processing unit or may be external to the processing unit. As used herein the term "memory" refers to any type of long term, short term, volatile, nonvolatile, or other storage devices and is not to be limited to any particular type of memory or number of memories, or type of media upon which memory is stored.

In another firmware and/or software implementation, the functions may be stored as one or more instructions or code on a non transitory computer-readable medium. Examples include computer-readable media encoded with a data structure and computer-readable media encoded with a computer program. Computer-readable media may take the form of an article of manufacture. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the words "connected" and "coupled" are used throughout for clarity of the description and can include either a direct connection or an indirect connection.

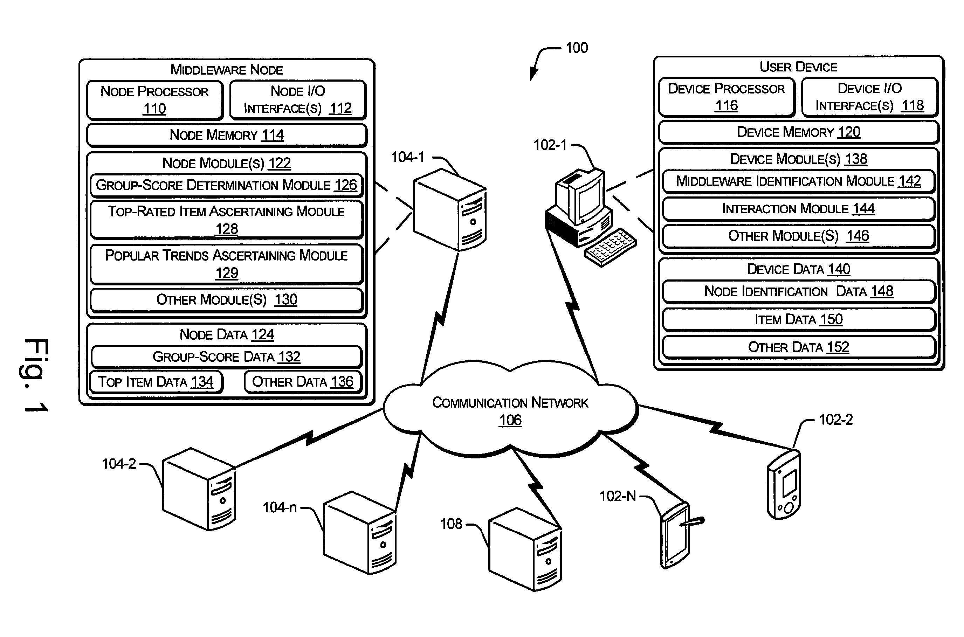

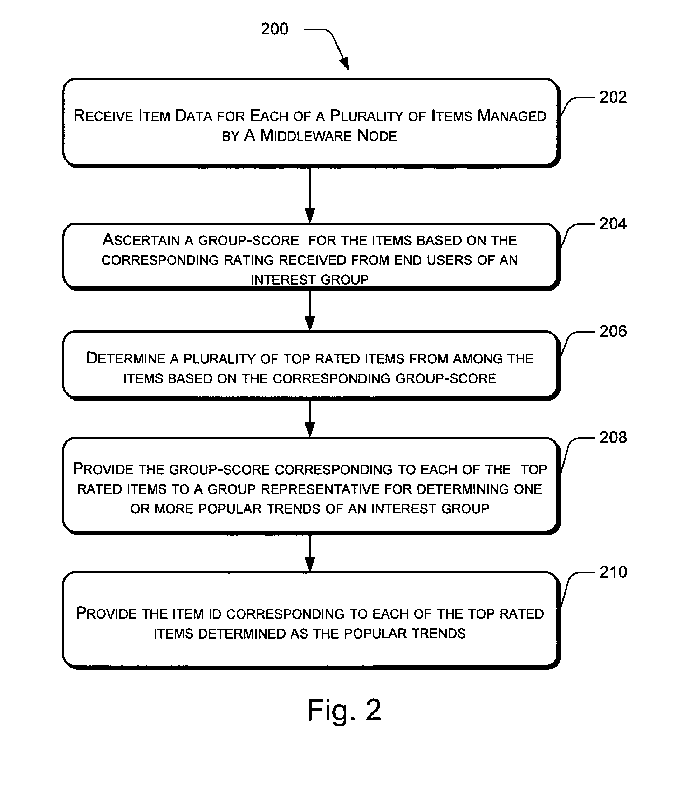

The manner in which the systems and methods of privacy-preserving computation of popular trends for group-based recommendation services shall be implemented, has been explained in details with respect to the Figures 1 and 2. While aspects of described systems and methods for privacy-preserving computation of popular trends for group-based recommendation services can be implemented in any number of different computing systems, transmission environments, and/or configurations, the embodiments are described in the context of the following exemplary system(s).

Fig. 1 illustrates a network environment 100 implementing privacy preserving computation of popular trends for group-based recommendation services, in accordance with an embodiment of the present subject matter. The network environment 100 includes one or more user devices 102-1, 102-2, ...., and 102-N, hereinafter collectively referred to as user devices 102 and individually referred to as user device 102. The user devices 102 communicate with each other and a plurality of middleware nodes 104-1, 104-2, ...., and 104-N, hereinafter collectively referred to as middleware nodes 104 and individually referred to as middleware node 104, through a communication network 106.

The communication network 106 may be a wireless network, or a combination of wired and wireless network. The communication network 106 can be a collection of individual networks, interconnected with each other and functioning as a single large network (e.g., the internet or an intranet). Examples of such individual networks include, but are not limited to, 3rd Generation Partnership Project (3GPP), Long Term Evolution (LTE), Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), and Integrated Services Digital Network (ISDN). The communication networks 106 may be any public or private network, including a local area network (LAN), a wide area network (WAN), the Internet, an intranet, a peer to peer network and a virtual private network (VPN) and may include a variety of network devices, such as routers, bridges, servers, computing devices, storage devices, etc.

The user devices 102 may be defined as user equipments used by end users to communicate with each other or with other network entities such as the middleware nodes 104 and a group aggregator 108 for facilitating data analytics and accessing various personalized services, such as recommendation services; personalized content, personalized search/query, social networks, data mining, and other related services. Examples of the user devices 102 may include, without limitation, computing devices, such as a laptop or other portable computers, a desktop computer, a notebook, network computers; a mobile phone; hand-held devices; a personal digital assistant; a workstation; a mainframe computer; a set top box a media player; central directory servers; database server; file server; print server; web server; application serve; and the like. Each of the user devices 102 works on a communication protocol as defined by the communication network 106 to which the user device 102 is coupled. Further, the user devices 102 are configured to interact with each other or other network entities, such as middleware nodes 104 and the group aggregator 108 over the communication network 106 using one or more of communication channel. In one implementation the communication channels may be anonymous communication channels configured based on, for example, onion routing framework, such as TOR to support anonymous communication between the user devices 102 and between the user devices 102 and other network entities, such as the middleware nodes 104 and the group aggregator 108.

Each of the middleware nodes 104 can be implemented as a variety of computing devices, such as a laptop computer, a desktop computer, a notebook, a workstation, a mainframe computer, a server, and the like. In one implementation the middleware nodes 104 are configured to interact with the user devices 102 and the group aggregator 108 over the communication network 106 using one or more anonymous communication channels. The anonymous communication channels may be configured based on, for example, onion routing framework, such as TOR to support anonymous communication.

The group aggregator 108 can be implemented as a variety of computing devices, such as a laptop computer, a desktop computer, a notebook, a workstation, a mainframe computer, a server, and the like. Although the group aggregator 108 is shown as an entity, the group aggregator 108 may also be implemented as a distributed computing system including multiple intermediary nodes distributed over a network where each node can be implemented as a computing devices, such as a laptop computer, a desktop computer, a notebook, a workstation, a mainframe computer, a server, and the like. Further, the intermediary nodes may be connected through an intermediate network (nor shown in the figure) for the purpose of communications and exchange of data.

In one embodiment, the group aggregator 108 is configured to manage one or more interest groups, such as thriller movies, salsa dancing, Hindi music, and social networking sites for providing recommendation services. For instance, in case of a collaborative filtering application, the group aggregator 108 may be configured to provide to each member of the cluster, recommendations related to not only the interest field corresponding to the interest group but also related to other top rated, i.e., highly ranked interest fields of the end users who are member of a cluster corresponding to the interest group. Similarly, in case of content-based recommendation applications, the group aggregator 108 may be configured to generate content-based recommendations based on semantic similarity of the popular trends of the group and a content repository storing contents like crawled content and advertisements. The items may be defined as different components belonging to an interest group. For example, song1 and song2 may be items belonging to an interest group related to Hindi music.

For the purpose, the group aggregator 108 may obtain one or more popular trends, i.e., items consumed and liked by maximum number of end users subscribed to the interest group from a group representative configured to compute the popular trends for each interest group. For instance, for the interest group related to Hindi music, the group representative may be configured to identify one or more songs that have been liked and given good ratings by a maximum number of end users subscribed to the interest group as the popular trends. In one implementation, the group representative may be configured to identify top items, say, top 10 items based on ratings received from the end users of the user devices 102 to determine the top trends of the interest group that may be recommended to all the end users subscribed to the interest group. Further, the items may be defined as different components belonging to an interest group. For example, song1 and song2 may be items belonging to an interest group related to Hindi music.

In one embodiment, the middleware nodes 104 are configured to act as intermediaries between the end users and the group aggregator 108. In one implementation, the middleware node 104 is configured to manage one or more items belonging to the interest group such that ratings for the items from all the end users subscribed to the interest group are received by the middleware node 104. For the purpose, the user devices 102 corresponding to the end users are configured to identify the middleware node 104 managing a particular item and provide the rating corresponding to the item to the middleware node 104.

For example, for the interest group corresponding to a particular type of music, say, Hindi music, each of the middleware nodes 104 may be configured to manage one or more songs, such that a first middleware node, say, the middleware node 104-1 may manage song1 and song(n+1), a second middleware node, say, the middleware node 104-2 may manage song2 and song(n+2), and an nth middleware node, say, the middleware node 104-n may manage song(n) and song(2n). Thus, the end users subscribed to the interest group Hindi music may provide the ratings for the song1 and the song(n+1) to the middleware node 1041-1 and the ratings for the song2 and the song(n+2) to the middleware node 104-2.

Further, in cases where the middleware nodes 104 are responsible for items corresponding to more than one interest group, the middleware nodes 104 may be configured to manage items based on the interest groups to which the items belong such that if an item belongs to more than one interest group, ratings from users of different interest groups are provided to different middleware nodes 104. For example, in case the song1 belongs to group1 and group2, the ratings from the end users of the group2 may be received by the middleware node 104-1, while the ratings from the end users of the group1 may be received by the middleware node 104-n.

Scrambling the items across various middleware nodes 104 helps in ensuring that no single entity receives data related to all items being consumed by the end users of a particular interest group, thus preserving privacy of the end users belonging the interest group. Further, scrambling the same items belonging to different interest groups among different middleware nodes 104 helps in ensuring privacy in cases where the items may be rarely accessed and thus can be easily used to identify the interest groups of the end users using additional information.

Further, the middleware nodes 104 may be configured to act as the group representatives for the interest groups. For instance, the middleware node 104-1 may be configured to function as the group representative for group1, while the middleware node 104-2 may be configured to act as the group representative for the group2. Further, in one embodiment a plurality of independent replicas of the group representative may be provided for identifying the top trends in an interest group such that for the interest group all the replicas may determine the top trends.

In one implementation, each of the middleware nodes 104 includes one or more node processor(s) 110, node I/O interface(s) 112, and a node memory 114 coupled to the node processor 110. Further, each of the user devices 102 includes device processor(s) 116, device I/O interface(s) 118, and a device memory 120 coupled to the device processor 116.

The node processor 110 and the device processors 116 can be a single processing unit or a number of units, all of which could also include multiple computing units. The node processor 110 and the device processors 116 may be implemented as one or more microprocessors, microcomputers, microcontrollers, digital signal processors, central processing units, state machines, logic circuitries, and/or any devices that manipulate signals based on operational instructions. Among other capabilities, each of the node processor 110 and the device processors 116 is configured to fetch and execute computer-readable instructions and data stored in the node memory 114 and the device memory 120, respectively.

The functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, network processor, application specific integrated circuit (ASIC), field programmable gate array (FPGA), read only memory (ROM) for storing software, random access memory (RAM), and non volatile storage. Other hardware, conventional and/or custom, may also be included.

Each of the device I/O interfaces 118 and the node I/O interfaces 112 may include a variety of software and hardware interfaces, for example, interface for peripheral device(s), such as a keyboard, a mouse, an external memory, and a printer. Further, the node I/O interfaces 112 may enable the middleware node 104 to communicate with other network entities, such as the MME, the PDN gateway, and like. Likewise the device I/O interfaces 118 may enable the user devices 102 to communicate with other network entities, such as the middleware node 104, and the like.

Each of the node memory 114 and the device memory 120 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In one implementation, the middleware node 104-1 includes node modules 122 and node data 124. The node modules 122, amongst other things, include routines, programs, objects, components, data structures, etc., which perform particular tasks or implement particular abstract data types. The node modules 122 may also be implemented as, signal processor(s), state machine(s), logic circuitries, and/or any other device or component that manipulate signals based on operational instructions.

Further, the node modules 122 can be implemented in hardware, instructions executed by a processing unit, or by a combination thereof. The processing unit can comprise a computer, a processor, such as the node processor 110, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the node modules 122 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

The node module(s) 122 further include a group-score determination module 126, a top-rated item ascertaining module 128, a popular trends ascertaining module 129, and other modules 130. The other module(s) 130 may include programs or coded instructions that supplement applications and functions of the middleware node 104.

The node data 124, amongst other things, serves as a repository for storing data processed, received, associated, and generated by one or more of the node module(s) 122. The node data 124 includes, for example, group-score data 132, top item data 134, and other data 136. The other data 136 includes data generated as a result of the execution of one or more modules in the other module(s) 130.

Further, each of the user devices 102 includes device modules 138 and device data 140. The device modules 138, amongst other things, include routines, programs, objects, components, data structures, etc., which perform particular tasks or implement particular abstract data types. The device modules 138 may also be implemented as, signal processor(s), state machine(s), logic circuitries, and/or any other device or component that manipulate signals based on operational instructions.

Further, the device modules 138 can be implemented in hardware, instructions executed by a processing unit, or by a combination thereof. The processing unit can comprise a computer, a processor, such as the device processor 116, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the device modules 138 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

Each of the device module(s) 138 further includes a middleware identification module 142, an interaction module 144, and other module(s) 146. The other module(s) 146 may include programs or coded instructions that supplement applications and functions of the user device 102. The device data 140, amongst other things, serves as a repository for storing data processed, received, associated, and generated by one or more of the device module(s) 140. Each of the device data 142 further includes node identification data 148, item data 150, and other data 152.

As previously described, the user devices 102 are configured to identify the middleware node 104 managing a particular item and provide the rating corresponding to the item to the middleware node 104. For the purpose, the middleware identification module 142 is configured to determine the middleware node 104 based on a node identifier computed using hash functions. In one implementation, the middleware identification module 142 is configured to compute the node identifier based on an item id of the item for which the ratings need to be sent. In another implementation, the middleware identification module 142 is configured to compute the node identifier based on the item id of the item and a group id corresponding to the interest group to which the item belongs. For instance, in cases where the middleware node 104 is responsible for items corresponding to only a single interest group, the middleware identification module 142 may compute the node identifier based only on the item id, while in cases where the middleware node 104 is responsible for items corresponding to more than one interest group, the middleware identification module 142 may compute the node identifier based on the item id and the group id. The middleware identification module 142 may subsequently save the node identifier in the node identification data 148.

Upon identification of the middleware node 142, the interaction module 144 may generate item data corresponding to the item accessed by the end user for providing ratings corresponding to the item to the group aggregator 108 via the middleware nodes 104. In one implementation, the item data may include item id corresponding to the item, group id corresponding to the group to which the item belongs, and the rating of the item data as given by the end user based on the user's liking of the item. For example, the interaction module 144 may generate item data corresponding to the item song1 belonging to the group1 using the item id corresponding to the song1, the group id corresponding to the group1 and rating corresponding to the song1, say, 3.5. In one implementation, the interaction module 144 may generate the item data in the form «item id, group id, rating». Further, the interaction module 144 may save the item id, the group id, and the ratings in the item data 150.

The interaction module 144 may further send the item data corresponding to the middleware node 104 identified using the node identifier. In one implementation, the interaction module 144 may be configured to encrypt the item data before sending it to the middleware node 104. For example, the interaction module 144 may encrypt the ratings of the item before generating the item data. Further, as previously described, the interaction module 144 may send the item data over the anonymous communication channels configured based on, for example, onion routing framework, such as TOR. For example, the interaction module 144 may send the item data corresponding to the song1 to the middleware node 104-1 and the item data corresponding to the song2 to the middleware node 104-2.

The middleware node 104, on receiving the item data may retrieve, from the item data, the rating corresponding to the item for which the item data is provided. In one implementation, the item data may be received by the group-score determination module 126 over the communication network 106. Upon receiving the item data, the group-score determination module 126 may retrieve the rating corresponding to the item and save the rating in the group-score data 132 for further processing. In one implementation, the group-score determination module 126 may use the ratings to determine a group-score for each of the item managed by the middleware node 104. The group-score for an item may be defined as an aggregate rating given to the item by the end users of a particular interest group indicating the popularity of the item among the end users of the interest group. For instance, in the previous example of the item song1 belonging to group1, the group-score for the item song1 indicates the average rating giving by the end users of the group1 thus indicating the popularity of the song1 among the end users of the group1.

In one implementation, the group-score determination module 126 may determine the group-score for an item by computing an average value of the ratings for the item received from all the end users accessing the item and subscribed to the particular interest group. Other examples of the group-scores may include, but are not limited to, frequency, average, standard deviation, and confidence interval of the ratings. The group-score thus determined may be saved by the group-score determination module 126 in the group-score data 132. Providing the ratings from all the end users, of the item belonging to a particular interest group, to a single middleware node 104 thus helps in efficient calculation of the group-score as the ratings are not required to be shared amongst different middleware nodes, thus preventing additional overheads and also ensuring privacy.

The group-scores thus calculated may be used by the top-rated item ascertaining module 128 to identify top-rated items for each interest group managed by the middleware node 104. The top rated-items may be defined as the items having maximum group-score from among the plurality of items managed by the middleware node 104. For the purpose, the top-rated item ascertaining module 128 initially accesses the group-score data 132 for obtaining the group-scores corresponding to all the items belonging to a single interest group. The top-rated item ascertaining module 128 may further sort the items in a descending order of group-scores such that an item having the highest group-score is at top position, while an item having the lowest group-score is at a bottom position. The top-rated item ascertaining module 128 may subsequently identify top-rated items for the interest group. For example, the top-rated item ascertaining module 128 may ascertain the top 10 items in the sorted list as the top-rated items. Further, the top-rated items along with the group-scores may be saved in the top item data 134 by the top-rated item ascertaining module 128.

Subsequently, the top-rated item ascertaining module 128 may provide the group-score corresponding to the top-rated items to the middleware node 104 acting as a group representative configured to compute the popular trends for the interest group to which the top-rated items belong. In one implementation, the top-rated item ascertaining module 128 may be configured to identify the group representative and its replicas for the interest group. The top-rated item ascertaining module 128 may determine the group representative based on a group node identifier. In one implementation, the group node identifier may be generated as a hash function based on the group id and a replica id. The middleware nodes 104 thus identified as the group representative and its replicas may be provided the group-scores corresponding to the top-rated items as node ratings data. In one implementation, the node ratings data may include only the group-scores corresponding to the top-rated items and not the item ids corresponding to the top-rated items, thus preserving privacy for the interest group. In another implementation, the node ratings data may include the group-scores corresponding to the top-rated items and pseudonyms for the item ids corresponding to the top-rated items. For instance, the top-rated item ascertaining module 128 may generate the pseudonyms in the form of M_(i,j) with j=1, 2, ... P, where j indicates the jth item in the top-rated items corresponding to the middleware node "i". For example, the middleware node 104-1 may provide the node ratings data in the form " *M_(1,1),3.5*>, <*M_(1,2), 4.8*>, <*M_(1,3), 1.5*> .... <*M_(1,p), groupscore p".*

Upon receiving the node ratings data corresponding to each of the middleware nodes 104, the middleware node 104 functioning as the group representative may identify a predefined number of top group-scores, say, 10 as the popular trends of the interest group for which the node ratings data are received. The popular trends ascertaining module 129 may initially obtain the group-scores from the node ratings data and sort the group-scores in a predefined order using any conventional known method of sorting. In one implementation, the popular trends ascertaining module 129 may use a method of merge sort for sorting the group-scores. For the purpose, the popular trends ascertaining module 129 may initially compare the highest group-scores for all the node ratings data to determine a highest group-score having the maximum value, from among the highest group-scores, as a top group-score. The popular trends ascertaining module 129 may then compare the remaining highest group-scores with a next highest group-score from the node ratings data corresponding to the highest group-score having the maximum value. A group-score having the maximum value may subsequently be determined as a next top group-score. The popular trends ascertaining module 129 iterates the process of comparison till top group-scores, say, top 10 group-scores, are determined.

The popular trends ascertaining module 129 may then request the middleware nodes 104 corresponding to the top group-scores to provide item ids of the items corresponding to the top group-score. In one implementation, the popular trends ascertaining module 129 may provide, to each middleware node 104, position of a last highest group-score that was included in the top group-scores. For example, if the group-scores corresponding to first three top-rated items of the middleware node 104-1 got selected in the top group-scores, the popular trends ascertaining module 129 may provide a value three indicating the selection of top three top-rated items of the middleware node 104. The middleware node 104-1 may subsequently provide item id corresponding to the first three top-rated items managed by it. In another implementation, the popular trends ascertaining module 129 may provide, to each middleware node 104, pseudonyms corresponding to the group-score included in the top group. The middleware node 104-1 may subsequently provide item id corresponding to the group-scores selected in the top-group-scores to the popular trends ascertaining module 129 for being published as the top trends of the interest group. Further, in one embodiment, the top-rated item ascertaining module 128 may provide the item ids upon receiving a similar list of top group-scores from a maximum number of replicas of the group representative.

Providing item ids of only the popular trends facilitates in computing the popular trends in a privacy preserving method as the item ids of the remaining items are hidden from the popular trends ascertaining module 129, thus ensuring user privacy even in cases where the middleware node 104 functioning as the group representative becomes malicious. The popular trends may be subsequently provided to the group aggregator 108 for various applications, such as collaborative filtering applications and content-based recommendation applications.

Further, the present subject matter also be used for computing top-T tags for each interest group based on semantic profiling approach to identify dominant interests of the interest group in the form of a tag-cloud. For the purpose, the middleware node 104 may be configured to represent each item's content, for example, an URL's HTML content as a weighted vector of tags using conventionally known techniques. For example a URL on American football may be mapped to tags like America, Sports, Football, NFL, and other keywords extracted from HTML contents of webpage, corresponding to the URL. The middleware node 104 may subsequently compute a summed weighted vector of tags for the items managed by it.

The middleware node 104 may then either reveal all the tags and associated summed weights to the popular trends ascertaining module 129 or provide only top-T tags with minimal revelation of information to the popular trends ascertaining module 129. For example, the middleware node 104 may reveal to the group aggregator 108, tags and associated locally summed weights one-by-one in the order of popular tags to rare tags among the items managed by the middleware node 104 till there are at least a predefined number of common tags, say, t across all the middleware nodes 104. Thus, the top-T tags based on overall weight can be computed accurately with minimal revelation of information to the popular trends ascertaining module 129.

Further, encrypting the ratings of the item before being transmitted to the group representative, provides for compatibility of the present subject matter with other conventional techniques, such as homomorphic-encryption and Shamir's secret-sharing, thus increasing resistance of the item data to privacy attacks by preventing the middleware nodes 104 from exploiting fine-grained information in the form of individual ratings. For instance, using homomorphic-encryption allows computation of the encrypted group-score of each item based on the encrypted ratings of the group members, thus avoiding instances of auxiliary-information attacks as a probable attacker may now have to access higher amount of auxiliary information in the absence of individual rating information. Further, as the homomorphic-encryption technique facilitates comparison of two numbers by using only their homomorphically-encrypted values, even the top-rated items of each of the middleware nodes 104 can be computed based on comparing the encrypted group-scores of these items. Similarly, the group-representative may be configured to compare the encrypted group-scores corresponding to the top-rated items of the middleware nodes 104 to determine the group's popular trends by identifying the items with the highest group-scores. Encrypting the ratings may thus enhance ability of the present subject matter to restrict privacy attacks on end user's data.

Fig 2 illustrates a method 200 for privacy preserving computation of popular trends for group-based recommendation services, in accordance with an embodiment of the present subject matter. The order in which the method is described is not intended to be construed as a limitation, and any number of the described method blocks can be combined in any order to implement the method 200 or any alternative methods. Additionally, individual blocks may be deleted from the methods without departing from the spirit and scope of the subject matter described herein. Furthermore, the method(s) can be implemented in any suitable hardware, software, firmware, or combination thereof.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the method(s) can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary method(s).

At block 202, item data for each of a plurality of items managed by a middleware node are received. In one implementation, a middleware node, for example, the middleware node 104 configured to manage a plurality of items may receive item data corresponding to items from one or more user devices 102. The item data, in one implementation, may include item id corresponding to the item, group id corresponding to the group to which the item belongs, and the rating of the item data as given by the user based on the user's liking of the item. For example, a first middleware node may receive item data corresponding to a movie1 and a movie2 from the user device 102. The item data thus received may be stored in the group-score data.

At block 204, a group-score for each of the plurality of items is ascertained. In one implementation, the middleware node may determine the group-score based on corresponding ratings received from one or more end users associated with an interest group. The group-score for an item may indicate the average rating given to item by the end users of a particular interest group and may be determined by computing an aggregate value of the ratings for the item received from all the end users accessing the item and subscribed to the particular interest group. The group-score thus computed may be stored in the group-score data

At block 206, a plurality of top-rated items from among the plurality of items is determined. In one implementation, the top-rated items are determined by the middleware node 104 based on the group-score corresponding to each of the plurality of items. For the purpose, the items managed by the middleware node are sorted in a descending order of group-scores such that an item having the highest group-score is at a top position, while an item having the lowest group-score is at a bottom position. A predefined number of top users, say top 10 users, may be subsequently ascertained as the top-rated items.

At block 208, the group-scores corresponding to each of the plurality of top-rated items are provided to a group representative for determining one or more popular trends of an interest group. In one implementation, the group-scores are provided as node ratings data using which the group representative may determine the popular trends for the interest group. In one implementation, the node ratings data may include only the group-scores corresponding to the top-rated items and not the item ids corresponding to the top-rated items, thus preserving privacy for the interest group. In another implementation, the node ratings data may include the group-scores corresponding to the top-rated items and pseudonyms for the item ids corresponding to the top-rated items. Providing only the group-scores or group-scores along with the pseudonyms helps in ensuring privacy as the group representative may now not know the item ids of the items corresponding to the group-scores.

At block 210, the item id corresponding to each of the plurality of top rated items determined as the popular trends is provided. In one implementation, the middleware node 104, upon receiving a list of the group-scores corresponding to the top-rated items determined as one of the popular trends provides the item id to the group representative.

Although embodiments for privacy preserving computation of popular trends for group-based recommendation services have been described in a language specific to structural features and/or method(s), it is to be understood that the invention is not necessarily limited to the specific features or method(s) described. Rather, the specific features and methods are disclosed as exemplary embodiments for privacy preserving computation of popular trends for group-based recommendation services.

## Claims

1. A privacy preserving network environment (100) comprising a plurality of middleware nodes (104), wherein each of the plurality of middleware nodes (104) is configured to manage a plurality of items, and wherein each of the plurality of middleware nodes (104) comprises:
a node processor (110); and;
a group-score determination module (126) coupled to the node processor (110), the group-score determination module (126) configured to:
receive, from one or more end users, item data for each of the plurality of items managed by the middleware node (104), wherein the item data includes an item id, a group id, and a rating of a corresponding item from among the plurality of items; and
ascertain for each of the plurality of items a group-score based on the corresponding rating; and
a top-rated item ascertaining module (128) coupled to the node processor (110), the top-rated item ascertaining module (128) configured to:
determine a plurality of top-rated items from among the plurality of items based on the group-score corresponding to each of the plurality of items; and
provide the group-score corresponding to each of the plurality of top-rated items to a group representative for computation of one or more popular trends of an interest group for group-based recommendation service.

2. The privacy preserving network environment (100) as claimed in claim 1, wherein the top-rated item ascertaining module (128) is further configured to identify as the group representative, a middleware node (104) from among the plurality of middleware nodes (104) based on a node identifier, and wherein the node identifier is generated based on the group id and a replica id.

3. The privacy preserving network environment (100) as claimed in claim 1, wherein each of the plurality of middleware nodes (104) further includes a popular trends ascertaining module (129) coupled to the node processor (110), the popular trends ascertaining module (129) configured to:
receive node ratings data from each of the plurality of middleware nodes (104), wherein the node ratings data includes the group-score corresponding to each of the plurality of top-rated items managed by the middleware node (104) corresponding to the node ratings data;
determine the one or more popular trends of the interest group based on the node ratings data; and
request each of the plurality of middleware nodes (104) to provide the item id of the item corresponding to the one or more popular trends.

4. A method for preserving privacy in a network environment, the method comprising:
receiving by a middleware node (104) item data for each of a plurality of items (104), wherein the plurality of items are managed by the middleware node (104) and wherein the item data includes an item id, a group id, and a rating of the item;
ascertaining for each of the plurality of items a group-score based on the corresponding rating received from one or more end users associated with an interest group;
determining a plurality of top-rated items from among the plurality of items, based on the group-score corresponding to each of the plurality of items; and
providing to a group representative the group-score corresponding to each of the plurality of top-rated items.

5. The method as claimed in claim 4, wherein the ascertaining further comprises computing at least one of an average, frequency, standard deviation, and confidence interval value of the ratings corresponding to the each of the plurality of item received.

6. The method as claimed in claim 4 further comprising:
receiving node ratings data from each of a plurality of middleware nodes (104), wherein the node ratings data includes the group-score corresponding to each of the plurality of top-rated items managed by the middleware node (104) corresponding to the node ratings data;
determining the one or more popular trends of the interest group based on the node ratings data; and
requesting each of the plurality of middleware nodes (104) to provide the item id of the item corresponding to the one or more popular trends.

7. The method as claimed in claim 4 further comprising identifying as the group representative, a middleware node (104) from among the plurality of middleware nodes (104) based on a node identifier, and wherein the node identifier is generated based on the group id and a replica id.

8. A user device (102) comprising:
a device processor (116);
a middleware identification module (142) coupled to the device processor (116), the middleware identification module (142) configured to determine the middleware node (104) from among a plurality of middleware nodes (104) based on the node identifier; and
an interaction module (144) coupled to the device processor (116), the interaction module (144) configured to provide item data corresponding to the item to the middleware node (104), wherein the item data includes an item id, a group id, and a rating of the item.

9. The user device (102) as claimed in claim 8, wherein the middleware identification module (142) is further configured to compute the node identifier based on the item id of the item.

10. The user device (102) as claimed in claim 8, wherein the middleware identification module (142) is further configured to compute the node identifier based on the item id of the item and the group id corresponding to an interest group to which an end user of the user device (102) belongs.

11. A method for identifying a middleware node (104) from among a plurality of middleware nodes (104) for privacy preserving computation of popular trends for group-based recommendation service, the method comprising:
computing a node identifier based at least on an item id of an item for which ratings need to be sent to a middleware node (104);
determining the middleware node (104) from among a plurality of middleware nodes (104) based on the node identifier; and
providing item data corresponding to the item to the middleware node (104), wherein the item data includes the item id, a group id, and a rating of the item.

12. The method as claimed in claim 11, wherein the method further comprises encrypting the rating of the item to obtain the item data.

13. A middleware node (104) comprising:
a node processor (110); and;
a group-score determination module (126) coupled to the node processor (110), the group-score determination module (126) configured to:
receive, from one or more end users, item data(150) for each of the plurality of items managed by the middleware node (104), wherein the item data includes an item id, a group id, and a rating of a corresponding item from among the plurality of items; and
ascertain for each of the plurality of items a group-score based on the corresponding rating; and
a top-rated item ascertaining module (128) coupled to the node processor (110), the top-rated item ascertaining module (128) configured to:
determine a plurality of top-rated items from among the plurality of items based on the group-score corresponding to each of the plurality of items;
identify a middleware node (104) from among the plurality of middleware nodes (104) as a group representative based on a node identifier, wherein the node identifier is generated based on the group id and a replica id; and
provide the group-score corresponding to each of the plurality of top-rated items to the group representative for computation of one or more popular trends of an interest group for group-based recommendation service.

14. A computer-readable medium having embodied thereon a computer program for executing a method for preserving privacy in a network environment, the method comprising, the method comprising:
receiving by a middleware node (104) item data for each of a plurality of items (104), wherein the plurality of items are managed by the middleware node (104) and wherein the item data includes an item id, a group id, and a rating of the item;
ascertaining for each of the plurality of items a group-score based on the corresponding rating received from one or more end users associated with an interest group;
determining a plurality of top-rated items from among the plurality of items, based on the group-score corresponding to each of the plurality of items; and
providing to a group representative the group-score corresponding to each of the plurality of top-rated items.

15. A computer-readable medium having embodied thereon a computer program for executing a method for identifying a middleware node (104) from among a plurality of middleware nodes (104) for privacy preserving computation of popular trends for group-based recommendation service, the method comprising:
computing a node identifier based at least on an item id of an item for which ratings need to be sent to a middleware node (104);
determining the middleware node (104) from among a plurality of middleware nodes (104) based on the node identifier; and
providing item data corresponding to the item to the middleware node (104), wherein the item data includes the item id, a group id, and a rating of the item.
